(19) Europäisches Patentamt
European Patent Office
Office européen des brevets

(11) **EP 2 111 750 A1**

(12) **EUROPEAN PATENT APPLICATION**

(43) Date of publication:
**28.10.2009 Bulletin 2009/44**

(51) Int Cl.:
**A01J 5/017** *(2006.01)*

(21) Application number: **08075316.3**

(22) Date of filing: **25.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Lely Patent N.V.**
**3147 PA Maassluis (NL)**

(72) Inventors:
• **Benzler, Steffen**
  **71737 Kirchberg/Murr (DE)**
• **Van der Tol, Patrick Philip Jacob**
  **3823 VH Amersfoort (NL)**

(74) Representative: **Jennen, Peter Leonardus Hendricus et al**
**Octrooibureau Van der Lely NV**
**Weverskade 110**
**3147 PA Maassluis (NL)**

(54) **Method for performing an animal-related operation and implement for performing the method**

(57) The invention provides a method for controlling a robot arm (2) arranged to bring animal operation means in a specific position relative to an animal body part, said robot arm being controlled to maintain a certain position relative to the animal body part (5) during the animal-related operation, said robot arm being controlled not to perform a movement unless the body part lies outside a tolerance range around a current position of the robot arm, characterized in that the boundaries of said tolerance range are defined repeatedly in dependence on at least the current position and the current speed of the animal body part. Hence, the tolerance range is dynamic, and dependent on the measured movement of the body part or body part reference point (10). By taking such movement into account, it has proved possible to reduce robot arm movements, both in number and in covered way. The invention also provides an implement arranged to perform the method.

FIG. 3

EP 2 111 750 A1

**Description**

The invention relates to a method for controlling a robot arm that is arranged to perform an animal-related operation, in accordance with the preamble of claim 1, as well as to an implement for performing said method.

Such a method is known. E.g., in fully automatic milking systems, also known as milking robots, use is made of a robot arm to position teat cups relative to the teats of an animal to be milked, in which position the teat cups are then attached to the teats. During milking the robot arm maintains a specific position relative to the udder, in order to follow, for example, the attached teat cups which are connected to the robot arm end, in case the animal moves. To achieve this, a tolerance range around the current position of the robot arm, or of a reference point indicative of said current position, which is repeatedly measured, is determined. The current position of the animal body part, or of a reference point indicative of said current position, is also repeatedly measured. The robot arm is controlled to perform a corrective movement if its current position lies outside the tolerance range.

It is a drawback of the known method that the robot arm sometimes performs corrective movements which are unnecessary. In doing so, its energy consumption is unnecessarily high. The unnecessary robot arm movements may also disturb the animal on which the operation is performed. Furthermore, the noise level in the bam is unnecessarily high. Besides, the robot arm is also subject to unnecessary wear and tear. In this respect it is noted that "robot arm" need not strictly be the arm proper, but may also relate to the total construction that is moved to bring the animal-related means into an operative position, or keep them there. For example, it could also relate to a vehicle, such as an autonomously movable vehicle, that is arranged to bring an arm, that could be, but need not be, a robot arm, to the teats. This will be elucidated further below. It is inter alia an object of the invention to avoid these drawbacks. This is achieved by the method of claim 1 and also by the method of claim 2.

The invention is based on the insight that, when taking into account the current speed of the animal body part in defining the tolerance range, a lot of unnecessary robot arm movements can be avoided. In the known method, a rather narrow tolerance range must be used, since one cannot run the risk that, when the body part is outside the tolerance range and also moves away from the robot arm, the teatcups etc. become detached. In the methods of the present invention, it is noted that, when the body part would be (just) outside that same tolerance range but moves back toward the robot arm, it would be superfluous to move the robot arm, since the distance between the two decreases anyway. In other words, it is possible to define a larger distance or tolerance range for such circumstances. Contrarily, if the distance between the body part and the robot arm is still smaller than that "old tolerance range", and the body part moves away from the robot arm, in particular with a high speed, it now becomes possible to already perform a robot arm position correction before the body part leaves the "old" tolerance range. This would more effectively prevent the running away of the body part. In other words, the tolerance range can be made smaller. Note that in each case it is not so much relevant that the tolerance range is made larger or smaller, but that it is dynamically varied in dependence of the circumstances.

In important remark to be made here is that all positions, speeds, possibly accelerations and so on, are relative with respect to the robot arm, or its reference point. That means for example that the robot arm could also be moving with respect to the "fixed world", e.g. in order to perform a corrective movement, which takes some time to complete. The actual position of the body part could then already have changed, so that the robot arms "lags". This situation may also be taken into account by using the relative position and movement. If, however, the robot arm movements are sufficiently quick with respect to those of the body part, it is a good approximation to neglect the former, and use only the position and movement of the body part with respect to the (assumed fixed) robot arm.

In the present context, an animal-related operation on a body part of an animal in principle relates to any kind of such operation, be it milking, cleaning, massaging, disinfecting, etc. of one or more teats, an udder, legs, or any other part of an animal. Similarly, the animal operation means relate to various possible means that can be used for such operation, as there are teatcups, brushes, cleaning or massaging devices and so on. The animal-related operation and animal operation means relate in particular to the teats of a milking animal, more in particular to cleaning, massaging, stimulating and/or disinfecting the teats, and most in particular to milking of the animal by means of attached teatcups. For during such operations, a very sensitive part of the animal has a device applied thereto, in particular teatcups. It is advantageous to allow a large freedom to move for the animal, but then the robot arm that is used to apply the animal operation means should at least more or less follow the body part. E.g., falling on a dirty floor of the animal operation means may then be prevented by making any connection between the operating means and the robot arm not too long. Otherwise, even if there is no connection between the animal operation means and the robot arm during the operation, making the robot arm follow the body part is advantageous in case of disconnection of the animal operation means, since then the robot arm is already near, which saves time in reconnecting. Furthermore, milking is a relatively time consuming animal-related operation, so that effective control of the robot arm during milking is important when managing dairy animals.

The expression "in a specific position" need not relate to only one position, i.e. one relative distance, but will rather relate to a range of such relative distances, in such a way that the animal operation means and the body part are in an operative mutual constellation. Similarly, "maintain a certain position" will thus relate not only to maintaining the exact same distance as closely as possible, but rather relates more broadly to maintaining an operative constellation, such as in particular a mutual distance within an operative range of distances.

Moreover, the relative position and/or distance may also be determined in a number of ways. However, in order to have an effective and unambiguous control of the mutual position, it is advisable to use some kind of reference, since both the robot arm and the animal body part will have some spatial extent. Thereto, one could apply a, visible or the like, marker to the body part and/or the robot arm, or e.g. use some other way to determine the desired position information, such as calculating a reference point of any part that has a sufficiently fixed spatial relationship to the body part or robot arm. Thus, a reference point could also only be indicative of the position of the body part or robot arm.

All of the above will be further elucidated when discussing further embodiments and dependent claims.

In one embodiment, the boundaries of said tolerance range are defined repeatedly in such a way that if the animal body part is approaching the robot arm, along the first direction, the tolerance on the side of the animal body part is made to be larger than if the animal body part is moving away from the robot arm. This uses the circumstances that a corrective movement is in principle not necessary when the body part is moving back into the tolerance range anyway. This may be equated to having a larger tolerance range when the body part is moving back to the robot arm.

In certain embodiments, the boundaries of said tolerance range are defined repeatedly in dependence on the current acceleration of the animal body part. In particular, the boundaries of said tolerance range are defined repeatedly in such a way that if the animal body part is accelerating towards or decelerating away from the robot arm, seen along the first direction, the tolerance on the side of the animal body part is made to be larger than if the animal body part is accelerating away from or decelerating towards the robot arm, seen along the first direction. Herein, "decelerating away from" relates to a movement with a speed toward the robot arm, but with an acceleration pointing away from the robot arm. These embodiments use the insight that not only the current speed may be indicative of whether or not to change the boundaries of the tolerance range, but also the value and the sign, i.e. direction, of the acceleration. For, a body part just outside a basic tolerance range, even having a current speed pointing away from the robot arm, but with a high deceleration value, will clearly move back into the tolerance range without having to make a corrective movement. Corresponding cases for other values and situations are easily found.

The robot arm may be a robot arm that is movable with respect to some frame, such as the box of a milking parlour. It could also be the frame of a vehicle, in particular an autonomously movable vehicle. Furthermore, the movability of the robot arm could also at least in part be the result of the movability of the vehicle, such that the vehicle moves in order to carry out a corrective movement. The same considerations as to preventing unnecessary movements to avoid wear, stress etc. hold here. One particular advantage of using such a vehicle is that there is optimum freedom for the animal to move in any direction. Note in particular that, due to the increased mass and thus inertia as compared to that of a robot arm proper, the relative position and movement of the vehicle plus robot arm should be taken into account in more cases than for the robot arm in a fixed frame. This has already been discussed further above.

In particular, the first direction relates to a longitudinal direction with respect to the animal. In most cases, the longitudinal direction corresponds to an average direction of the spine, i.e. the cranio-caudal direction, or the direction in which the animal would naturally move. Hence, a large freedom to move in this direction is desirable, as thus is an effective robot arm control in this longitudinal direction. However, the first direction could also relate to some other direction, but preferably in a horizontal plane, in particular perpendicular to the longitudinal direction, i.e. the latero-lateral direction. In an advantageous embodiment, the method is performed for two perpendicular directions. I.e., mutual position and speed, and possibly acceleration, is determined in a first and in a second direction, and the tolerance range boundaries are determined in each direction in dependence of the current mutual positions and speed, and possibly the acceleration, in that respective direction. Herein, the two directions could be completely independent. However, it is also possible to combine the two or more directions into an absolute distance, and perform all measurements and corrective actions on this absolute distance. One example is in the case of a movable vehicle. In this case, there is the possibility of the animal moving in the cranio-caudal direction, but also in the latero-lateral direction. In this case, the result could be that the distance in either direction changes but the total absolute distance does not, i.e. the animal is "running around in circles". In this case, of course, no corrective movement need take place. However, it is also generally noted that, although an animal will hardly make vertical movements, a displacement over a distance x in a certain direction need not lead to an absolute displacement over that distance x between the robot arm and the body part of the animal. This depends on the angle $\alpha$ between the two. Then, $\Delta$ (absolute displacement) = $\Delta$(displacement in horizontal plane/cos $\alpha$). Herein, the angle $\alpha$ is assumed to be subtended in a vertical plane, that is, the robot arm is assumed to be present below the body part. It is advantageous if the robot arm is brought to (about) the same horizontal plane as the body part, because then cos $\alpha$ will be about 1, and any change therein will be negligible. If the robot arm is also in a shifted position with respect to the vertical plane, then appropriate correction should be carried out.

In embodiments, the current position, speed and/or acceleration may be determined by independent measuring means, such as a laser detector or ultrasound detector, and so on. It is also possible, and preferable for simplicity, to determine speed and/or acceleration from multiple position determinations. For example, speed can be determined as change of position divided by elapsed time. In such case, only a single measuring device, for position as a function of the time, is required.

In certain embodiments, the robot arm is further being controlled not to perform a movement unless the animal body part is moving away from the robot arm, seen along the first direction of the animal. In particular, in order to determine whether the animal body part is moving away from the robot arm, at least two recently measured values of the current speed of the animal body part are used. This could e.g. be obtained by using three different position determinations, such as three consecutive determinations, from which two speed determinations are obtained.

In a particular, advantageous embodiment, in order to determine the current position of the animal body part, use is made of load cells connected to a weighing floor on which the animal is standing during the animal related operation, the output of said load cells being used to calculate the centre of mass of the animal. In this case, the centre of mass of an animal is taken as a reference point, which is determined by evaluating two or more load cell measurements. Herein, it is used that such a centre of mass is well-known for such animals, and that it is only the shift in its position which counts for maintaining a correct position.

In particular embodiments, the boundaries of the tolerance range are determined as:

$$tol+ = tol0 - c*acc - d*speed,$$

and

$$tol- = tol0 + c*acc + d*speed,$$

wherein
tol+ = boundary at the positive side
tol- = boundary at the negative side
tol0 = basic boundary value
acc = acceleration, taken to be zero if not further determined
speed = speed, and
c, d = mathematical constants.
Herein, "positive" and "negative" simply relate to a choice for any of the two directions away from the body part, cfr. a positive and negative x-axis. The above formulae are an elegant way to take into account the relative importance of speed and acceleration as compared to position. In practice, useful values for c and d may be found in dependence of e.g. the speed with which the robot arm may be moved, et cetera. If more than one dimension is considered, tolerance, distance, position, speed and acceleration may be considered in a vector approach or e.g. in two or more dependent or independent directions. Corresponding adaptations will easily be made.

In certain embodiments, the robot arm is moved toward the body part if the current position of the body part reference point, the body part, respectively, is more than tmax away from the robot arm reference point, the robot arm, respectively. This could be viewed as an overriding tolerance range, and whatever the values of speed, acceleration and so on, if the mutual distance is such that the body part position is outside this tmax range, the robot arm will be controlled to move towards the body part. This tmax range could e.g. relate to a range outside of which there could be danger or pain for the animal, and quick action is desirable. Note that this still differs from the known method in at least two ways. Not only may such tmax range be selected much larger than in the known methods, but in the new method there is robot arm correction for part of the positions within that tmax range, but outside a smaller range, that is still larger than possible for the known method, by the way.

In particular embodiments, the current value of the position and a speed, and in particular also an acceleration, is taken to be a filtered, in particular averaged, value of the at least two last determined values. The values could be based on a sampling frequency for determining the values. Such a sample frequency may be selected in accordance with a quickness of movement of the relevant body part. For example, when performing an operation on milking cows, a sampling frequency of about 10 Hz is easily feasible with current technology, while higher frequencies are desirable for higher accuracy, such as for mice.

The filtering may be simply an average or moving average value over the last two or more values, in order to limit noise and/or the effect of sudden irregular movements that by themselves quickly return to their starting poistions, such as sneezes. It is e.g. also possible to filter out movements that are detected for the reference point, but that are not realistic for the body part to be observed. So a maximum realistic speed could be assumed for e.g. an udder. Filtering also helps to obtain useful values for speed and other derivatives. Thus, (digital) filtering is a useful feature in the present method. For effective filtering techniques, reference is made to e.g. T.W. Parks, C.S. Burrus: Digital Filter Design, New York, John Wiley and Sons Inc., 1987 and A.V. Oppenheim, R.W. Schafer: Digital Signal Processing, Prentice-Hall Inc., Englewood Cliffe, New Jersey, 1975. The skilled person will select these or other filtering techniques for his purposes.

The invention also relates to an implement arranged to perform the method according to the invention. In particular, the implement comprises a robot arm arranged to bring and maintain an animal operation means in a specific position with respect to an animal body part, a position determining means that is arranged to determine a position of the animal body part with respect to the robot arm, and a robot arm control means that is arranged to perform the method of the invention. As the advantages of the method have already been explained, and these certainly also hold for the implement, reference is made to the respective discussions instead of repeating them here.

Advantageously, the implement comprises a vehicle that is autonomously movable under control of a control unit, and a robot arm with a robot arm control means, wherein at least one of the control unit and the robot arm control means is arranged to to perform the method of the invention to bring and/or maintain the robot arm in a specific position with respect to an animal body part.

The invention will now be further elucidated with reference to a concrete embodiment, but is, of course, not limited to this embodiment. In the drawings,

> Fig. 1 diagrammatically shows a part of a milking implement with a dairy animal;
> Fig. 2 shows a schematic view of the control criteria according to the prior art,
> Fig. 3 shows the similar situation, but now for the present invention, in one direction,
> Fig. 4 diagrammatically shows another embodiment of the invention, and
> Fig. 5 diagrammatically shows displacements in the case of Fig. 4.

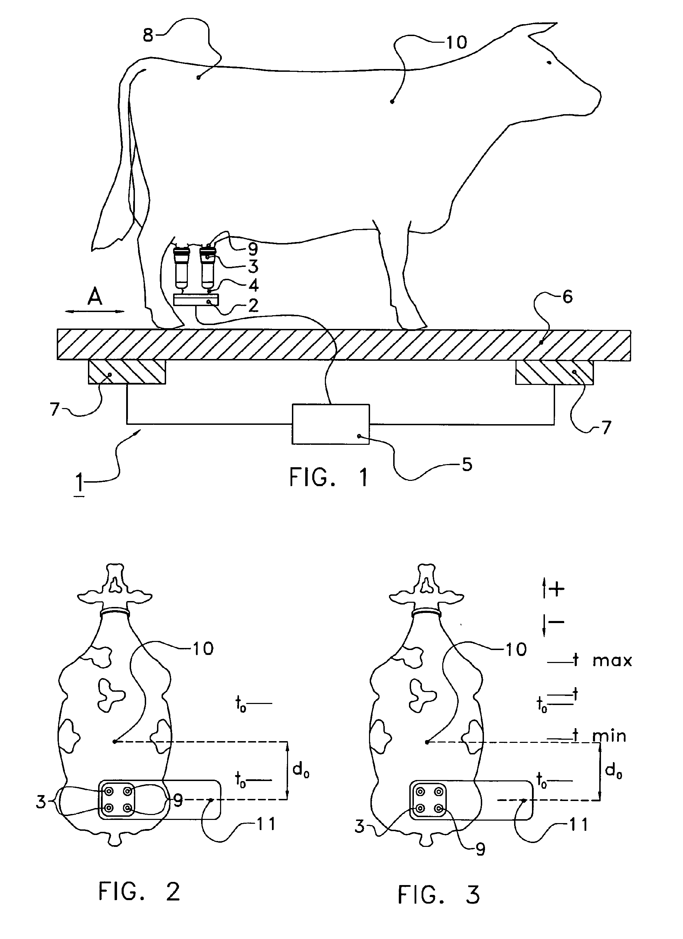

Fig. 1 diagrammatically shows a part of a milking implement with a dairy animal. The milking implement 1 has a robot arm 2, only the end of which is shown here, for applying teatcups 3, which are connected to the robot arm 2 via connecting means 4.

A control unit 5 serves to control the robot arm 2 and its movements in the direction of arrow A, and is connected to a weighing floor 6 with load cells 7.

The dairy animal 8, such as a cow, has teats 9, and a centre of mass 10.

The robot arm 2 can move in multiple directions in order to apply the teatcups 3 to the teats 9. However, in this embodiment it is assumed that during milking, as an example of an animal-related operation, the robot arm 2 will only follow movements along the direction of arrow A. This corresponds to the animal 8 moving forward or backward. In practice, this will be the most important direction, as the space in the perpendicular horizontal direction can be and will be much more limited, while displacements in the vertical direction do not relate to a normal physical movement, but possibly only to some emergency situation.

In the example shown, the centre of mass 10 is taken as the body part reference point. The position of point 10 is determined by means of the weighing floor 6, below which are provided load cells 7, in this case one on each corner. When the cow 8 moves, the relative load of the cells changes. From this change, a shift in the position of the centre of mass 10 can be calculated. Of course, other body part position determining means are possible, such as a laser or ultrasound measuring system, which is often provided on the robot arm itself. Since furthermore the position of the robot arm 2 is known from the control thereof, or alternatively could also be determined by position determining means, the mutual position of, or distance between, the body part reference point 10 and the robot arm 2 can also be determined.

Fig. 2 shows a schematic view of the control criteria according to the prior art, in respect of a plan view of the relevant parts. Here, as in all of the drawings, similar parts are indicated by the same reference numerals. The centre of mass 10 is taken to be the body part reference point, while 11 indicates a robot arm reference point, in this case the center line of the robot arm 2. The corresponding distance in this starting position is indicated by d0. The tolerance ranges in positive and negative directions are both indicated by t0 (symmetrical).

In use, the control unit will determine the position, or distance, of the body part reference point 10 with respect to the robot arm reference point 11. As long as this position, or distance, is within the indicated tolerance range around d0, the robot arm 2 is not moved. If the position is outside the tolerance range, the control unit performs a corrective movement of the robot arm 2 towards the starting position, or distance, d0. Since no information is available about any momentary movement of the body part or robot arm, the tolerance range t0 can only be taken relatively small, such as ±60 mm, in order to prevent e.g. undesired tension on the teatcups 3.

Fig. 3 shows the similar situation, but now for the present invention. Besides indicating the same t0 just for reference, also indicated is a tolerance t at the positive side, as well as tmax, on both sides.

The tolerance t indicates the tolerance range that is dependent on measured current speed and acceleration of the centre of mass 10. Depending on the actual values, t will be somewhere between tmin and tmax. Herein, tmin relates to a minimum practical value, below which position correction does not make sense, such as 20 mm, while tmax relates to a limiting value above which a corrective movement must be carried out immediately, regardless of actual speed and acceleration, and is e.g. 100 mm.

In the present example, t is calculated according to $t = 30 - 0.05 \cdot acc - 0.06 \cdot speed$

wherein

t = actual tolerance in mm

acc = acceleration of COM 10 in $mm/s^2$, and

speed = speed of COM 10 in mm/s, in each case taking the sign (direction) into account.

This leads to the following. If, at the time of measuring, the speed and acceleration are zero, both the system of the prior art and of the present invention show a similar tolerance. However, if for a moving body part, the tolerance will be different. For example, if the speed is -150 mm/s and the acceleration is -200 mm/s$^2$, i.e. a movement accelerating towards the robot arm, the allowable tolerance is now 79.5 mm, which is much higher than the original 60 mm. This indicates that the system is "smart" in that it realizes that the movement of the body part itself already corresponds to a corrective movement. Similarly, if the measured speed and acceleration indicate a movement and/or acceleration away from the robot arm, the tolerance range may become smaller, since it is realized that a corrective movement may be required to *prevent* the body part to move away from the robot arm too far. In this way, a number of unnecessary movements may be prevented, which saves energy, wear, and ensures a calmer, more stress-free environment for the animals.

When furthermore the measured values of position, speed and acceleration are taken to be filtered values, such as a moving average, the number of unnecessary movements may be further reduced, since e.g. "spikes" are removed, that would lead to a corrective movement in unfiltered circumstances. Note however that the response time increases in this situation.

In a practical test, it was measured how many robot arms movements were performed with the "old" criterion and with the system of the present invention. Since there would be no difference for cows that did not move, such as cows that are well adapted to the milking machine, test cows were stimulated to move. Under these circumstances, it was found possible to reduce the number of movements by between 16 and 37%, depending on the settings, while the total way, covered by the robot arm when performing the corrective movements, was shorter by between 20 and 34%.

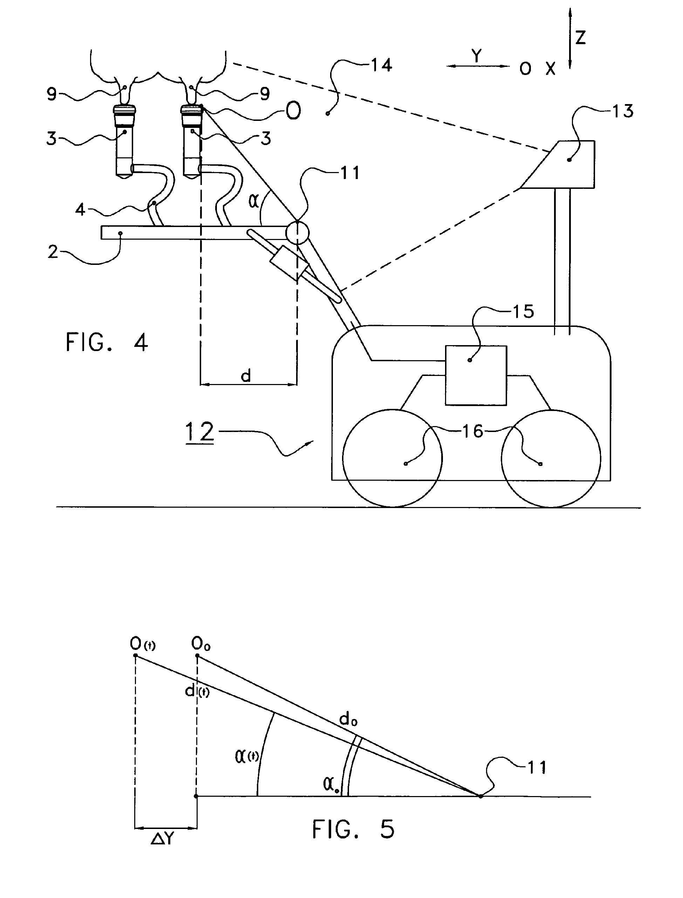

Fig. 4 diagrammatically shows another embodiment of the invention, with an autonomously movable vehicle 12, with a robot arm 2. Furthermore, there is provided a position detector 13 with a field of view 14, a control unit 15, and controllable wheels 16.

Furthermore, 11 denotes the robot arm reference point, while O denotes the body part reference point, $\alpha$ is the vertical angle between the horizontal and the line connecting reference points 11 and O, while d is the distance therebetween.

The autonomously movable vehicle 12 could be an automatic milking cart or the like. The robot arm 2 could be controllable in the vertical direction z by control unit 15, while movements in the horizontal directions x and y could be performed by moving the cart 2 as a whole by means of controlling the wheels 16. Other combinations of control to move the robot arm 2 if necessary are also possible.

In order to determine the position of the reference points 11 and O, the position detector 13 is provided, which could e.g. be a camera with object recognition, or in particular a 3D-sensor, that is able to provide an image with distance information with its field of view 14. On the basis of this information, the relative positions of O and 11, and thus any necessity for corrective movement, meay be determined. Detector 13 could e.g. be an ultrasonic or optical detector.

Fig. 5 diagrammatically shows displacements in the case of Fig. 4. Herein, the starting position is indicated by $O_0$, while the present position is indicated by O (t), with corresponding indications for the angle $\alpha$ and the distance d. In this case, the present position has been reached after a displacement over $\Delta y$ with respect to the starting position $O_0$. This displacement does not lead to a change in (absolute) distance equal to $\Delta y$, due to the influence of the change in $\alpha$. The actual change in distance is d(t) - do = ((d0 · cos$\alpha$) + $\Delta y$)/cos $\alpha$(t) - do. This may be determined from the position measurements, but could also directly be derived from the output of detector 13, if suitable. On the basis of this change in distance, and the changes therein (speed and/or acceleration), corrective movements for the robot arm and/or the vehicle could be performed on the basis of the method of the invention. Note that this could be extended to include displacements in x-direction, with appropriate amendments to the mathematics.

A main feature of the present invention is that the tolerance range is dynamic, and dependent on the measured movement of the body part or body part reference point. By taking such movement into account, it has proved possible to reduce robot arm movements, both in number and in covered way.

The present invention is not deemed limited by or to the above described embodiment, which is given only as an example. Rather, the scope is determined by the appended claims.

**Claims**

**1.** A method for controlling a robot arm that is arranged to perform an animal-related operation on a body part of an animal, using a robot arm for bringing animal operation means in a specific position relative to the animal body part, said robot arm being controlled to maintain a certain position relative to the animal body part during the animal-related operation, said robot arm being controlled not to perform a movement unless a body part reference point indicative of the current position of the animal body part, which is determined repeatedly, lies outside a tolerance range around a robot arm reference point indicative of the current position of the robot arm, which is also determined repeatedly, **characterized in that** the boundaries of said tolerance range are defined repeatedly in dependence on at least the current position and the current speed of the animal body part.

**2.** A method for controlling a robot arm that is arranged to perform an animal-related operation on a body part of an animal, in particular milking at least one teat of a milking animal, comprising:

- using a robot arm for bringing animal operation means in an operative position relative to the animal body part,
- repeatedly determining a relative position, along a first direction, of said animal body part with respect to said robot arm,
- controlling said robot arm with respect to the animal body part during the animal-related operation, to maintain said robot arm within a tolerance range around said animal body part along said first direction,

**characterized by**

- repeatedly determining a current speed, along said first direction, of said animal body part with respect to said robot arm, and
- varying said tolerance range in dependence on at least said determined current speed.

**3.** Method according to any preceding claim, **characterized in that** the boundaries of said tolerance range are defined repeatedly in such a way that if the animal body part is approaching the robot arm, along the first direction, the tolerance on the side of the animal body part is made to be larger than if the animal body part is moving away from the robot arm.

**4.** Method according to any preceding claim, **characterized in that** the boundaries of said tolerance range are defined repeatedly in dependence on the current acceleration of the animal body part.

**5.** Method according to claim 4, **characterized in that** the boundaries of said tolerance range are defined repeatedly in such a way that if the animal body part is accelerating towards or decelerating away from the robot arm, seen along the first direction, the tolerance on the side of the animal body part is made to be larger than if the animal body part is accelerating away from or decelerating towards the robot arm, seen along the first direction.

**6.** Method according to any preceding claim, **characterized in that** said robot arm is further being controlled not to perform a movement unless the animal body part is moving away from the robot arm, seen along the first direction of the animal.

**7.** Method according to claim 6, **characterized in that** in order to determine whether the animal body part is moving away from the robot arm, at least two recently measured values of the current speed of the animal body part are used.

**8.** Method according to any preceding claim, **characterized in that** in order to determine the current position of the animal body part, use is made of load cells connected to a weighing floor on which the animal is standing during the animal related operation, the output of said load cells being used to calculate the centre of mass of the animal.

**9.** Method according to any preceding claim, **characterized in that** the boundaries of the tolerance range are determined as:

tol+ = tol0 - c*acc - d*speed, and
tol- = tol0 + c*acc + d*speed,
wherein
tol+ = boundary at the positive side
tol- = boundary at the negative side
tol0 = basic boundary value
acc = acceleration, taken to be zero if not further determined
speed = speed, and
c, d = mathematical constants

**10.** Method according to any preceding claim, **characterized in that** the robot arm is moved toward the body part if the current position of the body part reference point, the body part, respectively, is more than tmax away from the robot arm reference point, the robot arm, respectively.

**11.** Method according to any preceding claim, **characterized in that** the current value of the position and a speed, and in particular also an acceleration, is taken to be a filtered, in particular averaged, average value of the at least two last determined values.

**12.** Implement arranged to perform the method according to any one of claims 1 to 11.

**13.** Implement according to claim 12, comprising a robot arm arranged to bring and maintain an animal operation means in a specific position with respect to an animal body part, a position determining means that is arranged to determine a position of the animal body part with respect to the robot arm, and a robot arm control means that is arranged to perform the method of any of claims 1-11.

FIG. 1

FIG. 2

FIG. 3

FIG. 4

FIG. 5

Europäisches
Patentamt

European
Patent Office

Office européen
des brevets

**EUROPEAN SEARCH REPORT**

Application Number

EP 08 07 5316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 41 13 700 A1 (SCHILLINGMANN DIETER DIPL ING [DE]) 29 October 1992 (1992-10-29)<br>* column 8, lines 30-59 *<br>* column 9, line 49 - column 11, line 34 *<br>* column 12, line 30 - column 13, line 19 *<br>* figures 1,2,3a,3b,4a,4b * | 1,2,9-13 | INV.<br>A01J5/017 |
| A | WO 97/15900 A (ALFA LAVAL AGRI AB [SE]; HALL ROBERT CHRISTOPHER [GB]; LEE STEPHEN ROB) 1 May 1997 (1997-05-01)<br>* page 12, line 24 - page 16, line 34 *<br>* figures 1-4 * | 1,2,12, 13 | |
| A | WO 2008/030086 A (MAASLAND NV [NL]; VAN DEN BERG KAREL [NL]) 13 March 2008 (2008-03-13)<br>* page 12, line 1 - page 13, line 12 *<br>* page 13, line 31 - page 15, line 20 *<br>* figures 1,2,5 * | | |

TECHNICAL FIELDS
SEARCHED (IPC)

A01J

The present search report has been drawn up for all claims

| Place of search | Date of completion of the search | Examiner |
|---|---|---|
| The Hague | 8 October 2008 | Been, Mathieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 08 07 5316

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2008

| Patent document cited in search report | | Publication date | Patent family member(s) | | Publication date |
|---|---|---|---|---|---|
| DE 4113700 | A1 | 29-10-1992 | NONE | | |
| WO 9715900 | A | 01-05-1997 | DE 69606059 D1 | | 10-02-2000 |
| | | | DE 69606059 T2 | | 03-08-2000 |
| | | | EP 0858640 A1 | | 19-08-1998 |
| | | | IL 123985 A | | 13-09-2001 |
| | | | JP 11513573 T | | 24-11-1999 |
| | | | JP 3916255 B2 | | 16-05-2007 |
| | | | US 5934220 A | | 10-08-1999 |
| WO 2008030086 | A | 13-03-2008 | NL 1032435 C2 | | 06-03-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T.W. Parks ; C.S. Burrus.** Digital Filter Design. John Wiley and Sons Inc, 1987

- **A.V. Oppenheim ; R.W. Schafer.** Digital Signal Processing. Prentice-Hall Inc, 1975